# EUROPEAN PATENT APPLICATION

(11) **EP 4 382 763 A1**
(43) Date of publication of application: **12.06.2024**
(21) Application number: 23212440.4
(22) Date of filing: 27.11.2023
(51) Int. Cl.: F16F 9/06, B64C 25/60, F16F 9/36

(54) **SYSTEMS AND METHODS TO IMPROVE SHOCK STRUT PERFORMANCE**

(30) Priority: 05.12.2022 IN 202241070155; 19.01.2023 US 202318099124
(71) Applicant: Goodrich Corporation, Charlotte, NC 28217-4578 (US)
(72) Inventor: BODKI, Basavaraj, 560037 Bangalore (IN); HEMANTH, M N, 573202 Hassan (IN)
(74) Representative: Dehns

(57) **Abstract**

A shock strut is disclosed herein. The shock strut includes a shock strut cylinder (204), a shock strut piston (206) slidably disposed within the shock strut cylinder (204), a rebound chamber (270) disposed within the shock strut cylinder (204) and adjacent the shock strut piston (206), a first percolation seal (250) configured to restrict a first flow of fluid between the shock strut cylinder (204) and the rebound chamber (270), and a second percolation seal (252) configured to restrict a second flow of fluid between the shock strut cylinder (204) and the shock strut piston (206).

## Description

### CROSS-REFERENCE TO RELATED APPLICATIONS

This application claims priority to, and the benefit of, India Patent Application No. 202241070155 (DAS CODE: F51E), filed December 5, 2022, and titled "SYSTEMS AND METHODS TO IMPROVE SHOCK STRUT."

### FIELD

The present disclosure generally relates to aircraft landing systems and, more particularly, to systems and methods to improve shock strut performance.

### BACKGROUND

Commercial and military aircraft typically include one or more landing gear assemblies that are configured for retraction into and extraction from a landing gear bay via one or more actuators. Such landing gear assemblies, for example, may be retracted into and stowed within the landing gear bay during flight and extended from the landing gear bay and deployed during takeoff, taxi, and landing events. A landing gear assembly typically includes a shock strut having an upper end pivotally mounted to a frame of the aircraft for pivotal displacement between a vertical, downwardly extending, landing and ground support position, and a horizontal or above horizontal retracted position nested within a landing gear bay or other location within the wing or fuselage of the aircraft.

Shock struts with mixed air/oil chambers may typically have a dynamic liquid damping chamber (e.g., a lower chamber) separated from a mixed gas and oil chamber (e.g., an upper chamber) by a metering orifice. Gas is known to leak into the lower chamber and oil into the upper chamber when the shock strut is in the retracted position; and, more particularly, when the shock strut is retracted to a position above a horizontal configuration where a portion of the lower chamber is positioned above a portion of the upper chamber (e.g., the shock strut is retracted to an angle greater than ninety degrees with respect to a vertical reference). When the shock strut is retracted to an angle greater than ninety degrees and maintained in that position for a period of time, the gas and oil may tend to switch chambers due to the force of gravity. As the shock strut is moved to an extended position, such as, for example, in preparation for a landing event, gas may begin to move back into the upper chamber and oil into the lower chamber. However, if there is insufficient flow area to allow the gas and oil to switch places (e.g., to allow the oil to flow back into the lower chamber and the gas to flow back into the upper chamber), the landing gear may not be ready to land within a prescribed time period following extension. This is because the shock strut is typically configured to work most efficiently with the lower chamber devoid of all or substantially all gas. Thus, if there is still gas in the lower chamber during the landing event, the shock strut may not perform at the highest efficiency. The adverse effect of such percolation may be exacerbated, moreover, by the cold temperatures typically encountered when operating at cruising altitudes.

### SUMMARY

A shock strut is disclosed herein. The shock struct includes a shock strut cylinder, a shock strut piston slidably disposed within the shock strut cylinder, a rebound chamber disposed within the shock strut cylinder and adjacent the shock strut piston, a first percolation seal configured to restrict a first flow of fluid between the shock strut cylinder and the rebound chamber, and a second percolation seal configured to restrict a second flow of fluid between the shock strut cylinder and the shock strut piston.

In various embodiments, a liquid chamber is defined on a first side of the second percolation seal and a mixed fluid chamber is defined on a second side of the second percolation seal, the second percolation seal being configured to restrict the second flow of fluid from the liquid chamber to the mixed fluid chamber. In various embodiments, the rebound chamber is defined on a first side of the first percolation seal and the mixed fluid chamber is further defined on a second side of the first percolation seal, the first percolation seal being configured to restrict the first flow of fluid from the rebound chamber to the mixed fluid chamber.

In various embodiments, the shock strut further includes a metering pin connected to the shock strut piston, wherein the second percolation seal is configured to engage the metering pin to restrict the second flow of fluid. In various embodiments, the shock strut further includes a fluid source and a conduit having a first end and a second end, the first end coupled to the fluid source, and the second end coupled to the first percolation seal and the second percolation seal. In various embodiments, the fluid source is configured to inflate and deflate the first percolation seal and the second percolation seal via the conduit, the first percolation seal restricting the first flow of fluid when inflated, and the second percolation seal restricting the second flow of fluid when inflated.

In various embodiments, the shock strut further includes an orifice support tube disposed within the shock strut cylinder, wherein the conduit is coupled to the orifice support tube and the first percolation seal and the second percolation seal are disposed within the orifice support tube. In various embodiments, the orifice support tube further includes a first channel and a second channel, the first percolation seal disposed within the first channel and the second percolation seal disposed within the second channel. In various embodiments, the first percolation seal is configured to engage a sidewall of the shock strut cylinder to restrict the first flow of fluid.

Also disclosed herein is a landing gear system. The landing gear system includes a fluid source, a conduit, and a shock strut coupled to the fluid source by the conduit. The shock strut includes a shock strut cylinder, a shock strut piston slidably disposed within the shock strut cylinder, a rebound chamber disposed within the shock strut cylinder and adjacent the shock strut piston, a first percolation seal configured to restrict a first flow of fluid between the shock strut cylinder and the rebound chamber, and a second percolation seal configured to restrict a second flow of fluid between the shock strut cylinder and the shock strut piston.

In various embodiments, the fluid source is configured to inflate the first percolation seal and the second percolation seal, the first percolation seal restricting the first flow of fluid when inflated, and the second percolation seal restricting the second flow of fluid when inflated. In various embodiments, the fluid source is further configured to deflate the first percolation seal and the second percolation seal, the first percolation seal permitting the first flow of fluid when deflated, and the second percolation seal permitting the second flow of fluid when deflated.

In various embodiments, the shock strut further includes an orifice support tube disposed within the shock strut cylinder, a first channel disposed within the orifice support tube, wherein the first percolation seal is disposed within the first channel, and a second channel disposed within the orifice support tube, wherein the second percolation seal is disposed within the second channel. In various embodiments, the conduit is coupled to the orifice support tube. In various embodiments, the shock strut further includes a metering pin coupled to the shock strut piston, wherein the second percolation seal is configured to engage the metering pin to restrict the second flow of fluid. In various embodiments, the first percolation seal is configured to engage a sidewall of the shock strut cylinder to restrict the first flow of fluid.

Also disclosed herein is a method of restricting percolation within a landing gear assembly. The method includes sensing whether the landing gear assembly is being retracted or extended, inflating a first percolation seal in response to the landing gear assembly being retracted, inflating a second percolation seal in response to the landing gear assembly being retracted, deflating the first percolation seal in response to the landing gear assembly being extended, and deflating the second percolation seal in response to the landing gear assembly being extended.

In various embodiments, the method further includes sensing whether the first percolation seal is in an inflated state or a deflated state and sensing whether the second percolation seal is in an inflated state or a deflated state. In various embodiments, the inflating the first percolation seal includes pressurizing a fluid in communication with the first percolation seal and the second percolation seal. In various embodiments, the deflating the first percolation seal includes depressurizing the fluid in communication with the first percolation seal and the second percolation seal.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft having left, right and nose landing gear assemblies and wheels mounted thereon, in accordance with various embodiments.
FIGS. 2A and 2B illustrate various mechanical components of a shock strut landing gear assembly, in accordance with various embodiments.
FIG. 3 illustrates various mechanical components of a shock strut landing gear assembly, in accordance with various embodiments.
FIG. 4 illustrates a system for operating a percolation seal within a shock strut of a landing gear assembly, in accordance with various embodiments.
FIG. 5 describes a method for restricting percolation within a shock strut of landing gear assembly, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Aircraft landing gears using shock struts with mixed gas and oil chambers have a dynamic liquid damping chamber separated by a metering orifice, primarily oil in the lower chamber and gas in the upper chamber. Gas and oil switch chambers when the gear is in a retracted position. When the landing gear is retracted at an angle and kept there for a period, the gas and oil will switch places, such that most of the oil is now in the upper chamber. In retracted condition, gas enters the rebound chamber and lower chamber. In this situation, the actual time for the gas and oil to revert to the standard gas over oil column arrangement is much longer and may result in increased landing loads if enough oil does not reach the oil chamber before landing. This may create a risk of damage to the landing gear and/or the aircraft structure. In addition, the entrapped gas in the rebound chamber may lead to, excessive loads being transmitted to the outstop tube, bearing, and gland during free extension and aircraft bouncing (e.g., up and down movement) with respect to runways following landing impact.

Typically, gravity pulls the fluid downward and forces the trapped gas present in the lower and rebound chambers to percolate upward after the gear drops down from retraction. However, at cold temperatures oil viscosity changes and is a prominent factor that effects the time for the gas to percolate into the upper chamber. Remaining gas inside the rebound chamber and lower chamber may affect the shock strut hydraulic damping characteristics. For example, entrained gas affects the shock strut hydraulic damping characteristics.

Disclosed herein is a shock strut of a landing gear assembly including an upper chamber, a lower chamber, and rebound chamber. Upper chamber is in fluid communication with lower chamber and rebound chamber. In various embodiments, upper chamber is configured to contain a mixture of gas and liquid (e.g., air and oil). In various embodiments, lower chamber is configured to contain a liquid (e.g., oil). In various embodiments, rebound chamber is configured to contain a liquid (e.g., oil). In various embodiments, the shock strut includes a first percolation seal between the upper chamber and the rebound chamber and a second percolation seal between the upper chamber and the lower chamber. In various embodiments, when in a deflated state, first and second percolation seals do not restrict fluid flow between rebound chamber and upper chamber and between lower chamber and upper chamber, respectively. In various embodiments, when in an inflated state, first and second percolation seals restrict fluid flow between rebound chamber and upper chamber and between lower chamber and upper chamber, respectively.

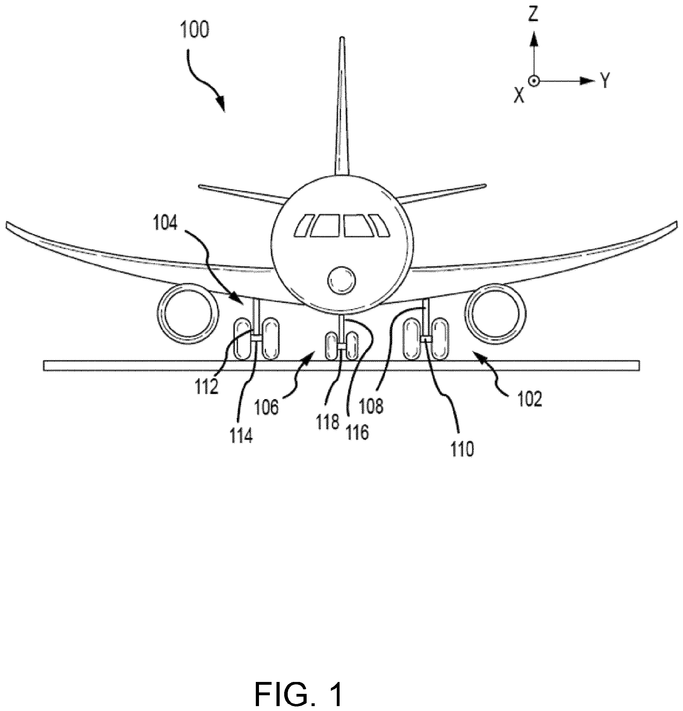

Referring now to FIG. 1, an aircraft 100 is illustrated, in accordance with various embodiments. In accordance with various embodiments, aircraft 100 may include one or more landing gear assemblies, such as, for example, a left landing gear assembly 102 (or port-side landing gear assembly), a right landing gear assembly 104 (or starboard-side landing gear assembly) and a nose landing gear assembly 106. Each of left landing gear assembly 102, right landing gear assembly 104, and nose landing gear assembly 106 may support aircraft 100 when not flying, allowing aircraft 100 to taxi, takeoff, and land safely and without damage to aircraft 100. In various embodiments, left landing gear assembly 102 may include a left shock strut assembly 108 and a left wheel assembly 110, right landing gear assembly 104 may include a right shock strut assembly 112 and a right wheel assembly 114, and nose landing gear assembly 106 may include a nose shock strut assembly 116 and a nose wheel assembly 118.

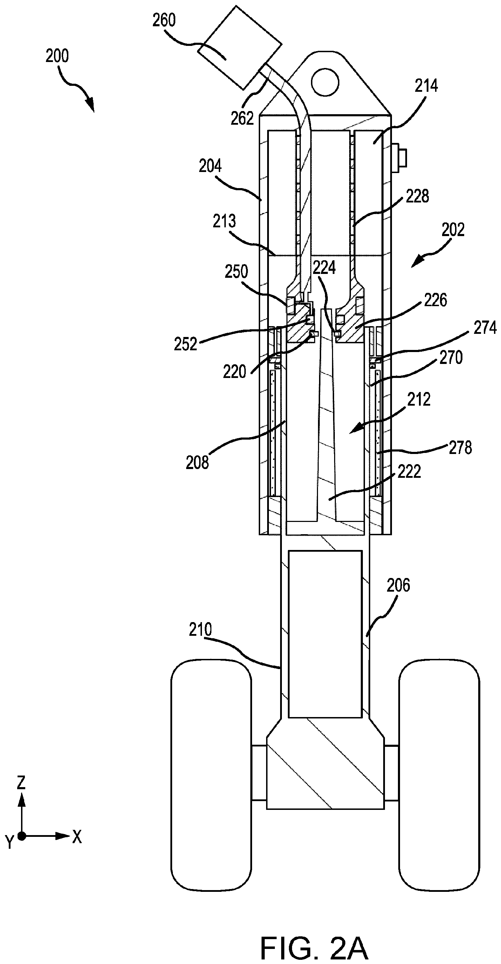

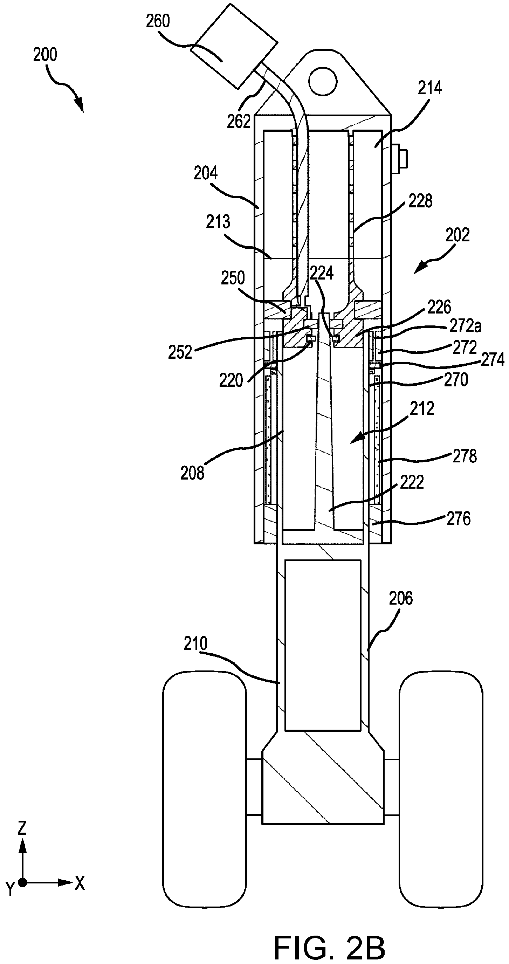

Referring now to FIGS. 2A and 2B, a landing gear assembly 200, similar to the landing gear assemblies described above with reference to FIG. 1, is illustrated. In accordance with various embodiments, landing gear assembly 200 includes a shock strut 202, which itself may include a shock strut cylinder 204 and a shock strut piston 206. Shock strut piston 206 is operatively coupled to slide or telescope within shock strut cylinder 204. Shock strut piston 206 may comprise a first end 208 disposed within shock strut cylinder 204 and a second end 210 extending from shock strut cylinder 204. Shock strut cylinder 204 may be configured to receive shock strut piston 206 in a manner that allows the two components to telescope together and absorb and dampen forces transmitted thereto. FIG. 2A illustrates shock strut 202 in an extended position. When in a compressed position, shock strut piston 206 will have translated or slid a distance into shock strut cylinder 204 from that illustrated in FIG. 2A.

Shock strut cylinder 204 may be divided into a liquid chamber 212 and a mixed fluid chamber 214 as indicated by a line 213. In various embodiments, a liquid, such as, for example, hydraulic fluid or oil may be located within liquid chamber 212. Further, a gas, such as nitrogen or air, may be located within mixed fluid chamber 214. In various embodiments, fluid may be used to indicate the presence of a liquid and/or a gas (e.g., mixed fluid chamber 214). In various embodiments, shock strut cylinder 204 and shock strut piston 206 are configured to seal (e.g., via a first seal ring) such that the liquid contained within liquid chamber 212 is prevented from leaking into mixed fluid chamber 214 as shock strut piston 206 translates relative to shock strut cylinder 204. In various embodiments, shock strut 202 includes an orifice plate 220 configured to separate liquid chamber 212 (also referred to herein as a first chamber or a dynamic liquid chamber) from mixed fluid chamber 214 (also referred to herein as a second chamber or a mixed gas/liquid chamber). In this regard, during operation, the liquid, such as, for example, hydraulic fluid or oil, may be located within liquid chamber 212 (or the first or dynamic liquid chamber) and a mixture of a gas, such as, for example, nitrogen or air, and the liquid may be located within mixed fluid chamber 214 (or the second or mixed gas/liquid chamber).

Still referring to FIGS. 2A and 2B, the shock strut 202 includes a metering pin 222 coupled to shock strut piston 206 and configured to translate with shock strut piston 206. In various embodiments, metering pin 222 is received by and extends through orifice plate 220. Orifice plate 220 may comprise a metering pin aperture 224 configured to receive metering pin 222. In various embodiments, metering pin 222 includes a metering flute (or a plurality of metering flutes) disposed along the length (e.g., along the Z-direction) of the metering pin 222. As described herein, the metering flute defines a flow channel between metering pin 222 and metering pin aperture 224 of orifice plate 220 through which liquid may travel from liquid chamber 212 to mixed fluid chamber 214 in response to shock strut 202 moving to a compressed position from an extended position. In various embodiments, orifice plate 220 is housed within a retainer housing 226 and may include a retainer plate. Both orifice plate 220 and the annular plate are typically annular in shape and secured to an orifice support tube 228. Retainer housing 226 and, in various embodiments the retainer plate, are configured to restrict, but not prevent, the flow of fluid (e.g., liquid and/or gas) from liquid chamber 212 into mixed fluid chamber 214 during compression of shock strut 202. Conversely, orifice plate 220 may translate away from the retainer plate during extension of shock strut 202 or when shock strut 202 is retracted into a landing gear bay, thereby reducing the restriction and allowing the liquid in mixed fluid chamber 214 to flow back into liquid chamber 212. In various embodiments, orifice plate 220 may be free to move within a channel formed in the orifice retainer plate.

As described in more detail below, landing gear assembly 200 further includes a first percolation seal 250 and a second percolation seal 252 configured to restrict the flow (or percolation) of fluid (e.g., liquid and/or gas) from liquid chamber 212 into mixed fluid chamber 214 while shock strut 202 is retracted into the landing gear bay of an aircraft. In various embodiments, first percolation seal 250 and second percolation seal are operatively coupled to a fluid source 260 that may be housed within the aircraft and connected to first percolation seal 250 and second percolation seal 252 via a conduit 262. In various embodiments, fluid source 260 may be housed internal to or within shock strut 202, rather than being housed within the aircraft, and connected to first percolation seal 250 via conduit 262. In various embodiments, conduit 262 may be coupled to orifice support tube 228. In various embodiments, conduit 262 may be an integral part of orifice support tube 228, conduit 262 being formed within the body of orifice support tube 228.

Landing gear assembly 200, and more specifically shock strut 202, further includes a rebound chamber 270, an upper bearing 272, a rebound ring 274, a lower bearing 276, and an outstop tube 278. Rebound chamber 270 may provide dampening for shock strut 202 during landing gear extension. In various embodiments, rebound chamber 270 may be annular and located between shock strut cylinder 204 and shock strut piston 206. Upper bearing 272 and lower bearing 276 may permit shock strut piston 206 and shock strut cylinder 204 to telescope together. Upper bearing 272 may include an opening 272a through which oil may pass into and out of rebound chamber 270. Rebound ring 274 partially seals opening 272a, restricting the flow of fluid (e.g., oil and/or gas) from rebound chamber 270 into liquid chamber 212 and thereby improving the dampening effect of rebound chamber 270.

Continuing with FIG. 2A, illustrated is landing gear assembly 200 in the extended position, and more specifically, shock strut 202 with first percolation seal 250 and second percolation seal 252 in a deflated, or deactivated, state. In the deflated state, first percolation seal 250 and second percolation seal 252 do not restrict the flow of fluid (e.g., oil and/or gas) from the liquid chamber 212 and rebound chamber 270 to mixed fluid chamber 214, and vice versa. This allows landing gear assembly 200 to function as intended during taxi, takeoff, and landing.

Referring now to FIG. 2B, illustrated is landing gear assembly 200 in the extended position, and more specifically, shock strut 202 with first percolation seal 250 and second percolation seal 252 in an inflated, or activated, state. In the inflated state, first percolation seal 250 and second percolation seal 252 restrict the flow of fluid (e.g., oil and/or gas) from liquid chamber 212 and rebound chamber 270 to mixed fluid chamber 214, and vice versa. More specifically, first percolation seal 250 restricts the flow of fluid from rebound chamber 270 to mixed fluid chamber 214 and second percolation seal 252 restricts the flow of fluid from liquid chamber 212 to mixed fluid chamber 214. In various embodiments, first percolation seal 250 and second percolation seal 252 may eliminate flow of fluid from liquid chamber 212 and rebound chamber 270 to mixed fluid chamber 214.

First percolation seal 250 and second percolation seal 252 may, in various embodiments, be inflated or deflated by pressurizing or depressurizing a fluid (e.g., an oil or a gas) in fluid communication with first percolation seal 250 and second percolation seal 252. In various embodiments, first percolation seal 250 and second percolation seal 252 are operatively coupled to fluid source 260 via conduit 262 to be inflated and deflated by the fluid. Fluid source 260 is configured to pressurize the fluid in order to inflate first percolation seal 250 and second percolation seal 252 and to depressurize the fluid in order to deflate first percolation seal 250 and second percolation seal 252. When inflated, as illustrated in FIG. 2B, first percolation seal 250 contacts an inner wall of shock strut cylinder 204 thereby sealing rebound chamber 270 from mixed fluid chamber 214 and thereby restricting the flow of fluid from rebound chamber 270 to mixed fluid chamber 214. When inflated, as illustrated in FIG. 2B, second percolation seal 252 contacts metering pin 222 thereby sealing liquid chamber 212 from mixed fluid chamber 214 and thereby restricting the flow of fluid from liquid chamber 212 to mixed fluid chamber 214. In various embodiments, fluid source 260 may include a pressure sensor configured to sense the pressure of the fluid in order to determine whether each of first percolation seal 250 and second percolation seal 252 is an inflated state or a deflated state.

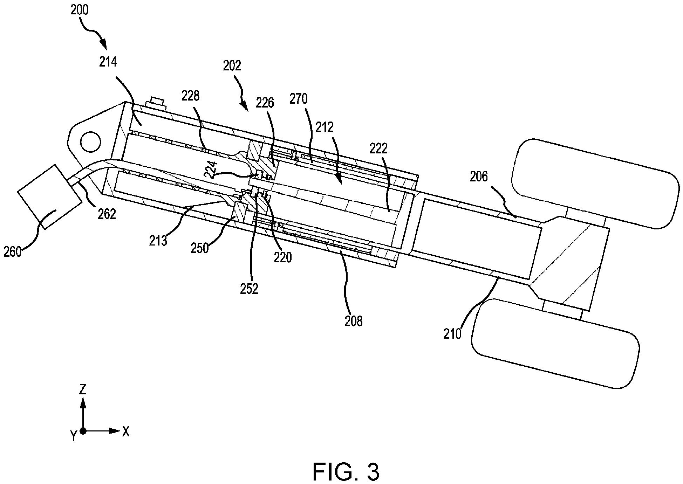

Referring now to FIG. 3, illustrated is landing gear assembly 200 in a stowed position, in accordance with various embodiments. As illustrated, landing gear assembly 200 is stowed below horizontal (e.g., below the X axis) with liquid chamber 212 being below mixed fluid chamber 214. In various embodiments, landing gear assembly 200 may be stowed horizontally (e.g., parallel to the X axis) with liquid chamber 212 being in line with mixed fluid chamber 214. In various embodiments, landing gear assembly 200 may be stowed above horizontal (e.g., above the X axis) with liquid chamber 212 being above mixed fluid chamber 214. As illustrated in FIG. 3, first percolation seal 250 and second percolation seal 252 are in the inflated state, thereby restricting, or eliminating, flow of the fluid (e.g., liquid and/or gas) from liquid chamber 212 and rebound chamber 270 to mixed fluid chamber 214 and from mixed fluid chamber 214 to liquid chamber 212 and/or rebound chamber 270. This results in liquid chamber 212 and rebound chamber 270 being filled with liquid (e.g., oil) with little to no gas present in either chamber.

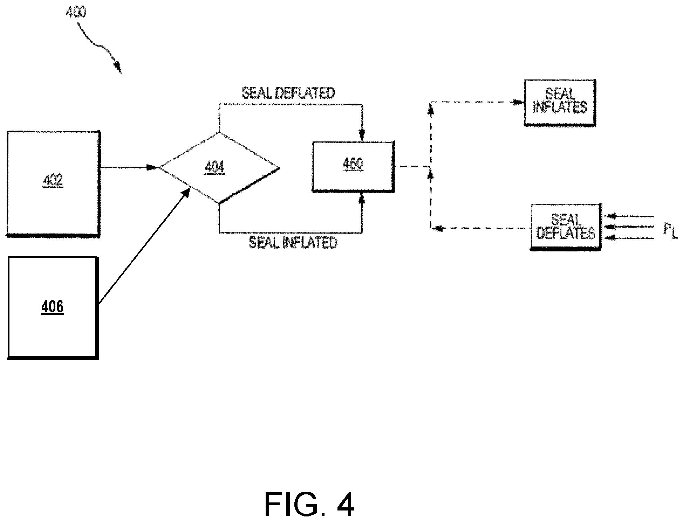

Referring now to FIG. 4, a system 400 (or a landing gear system) for operating first and second percolation seals (e.g., first percolation seal 250 and/or second percolation seal 252) within a landing gear assembly is described, in accordance with various embodiments. System 400 includes a sensor 402 (or a first sensor) and a pressure sensor 406 (or a second sensor). Sensor 402 may be configured to provide input signals to a controller 404. In various embodiments, sensor 402 is configured to sense one or more of a weight on wheel (WOW) value, a torque link position value, a drag brace position value or a retract actuator position value. Ultimately, the sensed values are transmitted to controller 404 to indicate whether a landing gear assembly having first and second percolation seals (e.g., landing gear assembly 200, first percolation seal 250, and second percolation seal 252 described above with reference to FIGS. 2A, 2B, and 3) is being retracted or extended. Pressure sensor 406 may be coupled to a fluid used to inflate or deflate first and second percolation seals 250, 252. Pressure sensor 406 may further be configured to provide input signals to controller 404. Controller 404 may determine whether the first and second percolation seals 250, 252 are in an inflated state or a deflated state based on input from pressure sensor 406. If the first and second percolation seals 250, 252 are in the deflated state (e.g., during retraction following takeoff), then controller 404 instructs a fluid source 460 (e.g., fluid source 260 described above) to inflate the first and second percolation seals 250, 252. If the first and second percolation seals 250, 252 are in the inflated state (e.g., during approach prior to landing), then controller 404 instructs fluid source 460 to relieve the pressure on the fluid seal, thereby deflating the first and second percolation seals 250, 252. In various embodiments, deflating the first and second percolation seals 250, 252 may occur via fluid source 460 reducing the pressure against the first and second percolation seals 250, 252 to a nominal value, thereby allowing the pressure, P_{L}, of the liquid within the liquid chamber (e.g., liquid chamber 212 described above) to automatically deflate the percolation seal upon landing or fluid source 460 may apply a suction to the first and second percolation seals 250, 252, thereby manually deflating the first and second percolation seals 250, 252 prior to landing. In various embodiments, controller 404 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof. In various embodiments, controller 404 may further include memory to store data, executable instructions, system program instructions, and/or controller instructions to implement the control logic of controller 404.

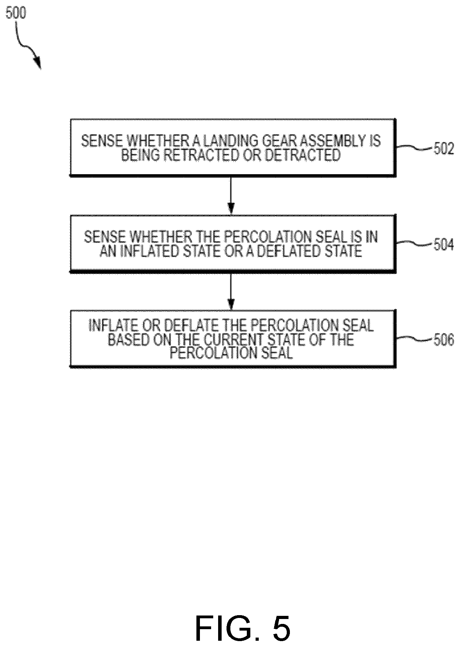

Referring now to FIG. 5, a method 500 for restricting percolation within a landing gear assembly is described, in accordance with various embodiments. A first step 502 includes sensing whether a landing gear assembly 200 is being retracted or extended. In various embodiments, the sensing is accomplished via a first sensor (e.g., sensor 402) configured to sense one or more of a weight on wheel (WOW) value, a torque link position value, a drag brace position value or a retract actuator position value. A second step 504 includes sensing whether first and second percolation seals 250, 252 are in an inflated state or a deflated state. In various embodiments, the sensing is accomplished via a second sensor coupled to a fluid used to inflate or deflate the first and second percolation seals 250, 252. A third step 506 includes either inflating or deflating the first and second percolation seals 250, 252 based on the current state of the first and second percolation seals 250, 252. In various embodiments, inflation of the first and second percolation seals 250, 252 is accomplished by pressurizing a fluid in communication with the first and second percolation seals 250, 252 and deflation of the first and second percolation seals 250, 252 is accomplished by depressurizing the fluid.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1 % of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A shock strut, comprising:
a shock strut cylinder (204);
a shock strut piston (206) slidably disposed within the shock strut cylinder (204);
a rebound chamber (270) disposed within the shock strut cylinder (204) and adjacent the shock strut piston (206);
a first percolation seal (250) configured to restrict a first flow of fluid between the shock strut cylinder (204) and the rebound chamber (270); and
a second percolation seal (252) configured to restrict a second flow of fluid between the shock strut cylinder (204) and the shock strut piston (206).

2. The shock strut of claim 1, wherein a liquid chamber is defined on a first side of the second percolation seal (252) and a mixed fluid chamber is defined on a second side of the second percolation seal (252), the second percolation seal (252) being configured to restrict the second flow of fluid from the liquid chamber to the mixed fluid chamber.

3. The shock strut of claim 2, wherein the rebound chamber (270) is defined on a first side of the first percolation seal (250) and the mixed fluid chamber is further defined on a second side of the first percolation seal (250), the first percolation seal (250) being configured to restrict the first flow of fluid from the rebound chamber (270) to the mixed fluid chamber.

4. The shock strut of any preceding claim, further comprising:
a metering pin connected to the shock strut piston (206), wherein the second percolation seal (252) is configured to engage the metering pin to restrict the second flow of fluid.

5. The shock strut of any preceding claim, further comprising:
a fluid source; and
a conduit having a first end and a second end, the first end coupled to the fluid source, and the second end coupled to the first percolation seal (250) and the second percolation seal (252).

6. The shock strut of claim 5, wherein the fluid source is configured to inflate and deflate the first percolation seal (250) and the second percolation seal (252) via the conduit, the first percolation seal (250) restricting the first flow of fluid when inflated, and the second percolation seal (252) restricting the second flow of fluid when inflated.

7. The shock strut of claim 5, further comprising:
an orifice support tube disposed within the shock strut cylinder (204), wherein the conduit is coupled to the orifice support tube and the first percolation seal (250) and the second percolation seal (252) are disposed within the orifice support tube, and optionally wherein the orifice support tube further comprising:
a first channel; and
a second channel, the first percolation seal (250) disposed within the first channel and the second percolation seal (252) disposed within the second channel.

8. The shock strut of any preceding claim, wherein the first percolation seal (250) is configured to engage a sidewall of the shock strut cylinder (204) to restrict the first flow of fluid.

9. A landing gear system, comprising:
a fluid source;
a conduit; and
a shock strut coupled to the fluid source by the conduit, the shock strut including:
a shock strut cylinder (204);
a shock strut piston (206) slidably disposed within the shock strut cylinder (204);
a rebound chamber (270) disposed within the shock strut cylinder (204) and adjacent the shock strut piston (206);
a first percolation seal (250) configured to restrict a first flow of fluid between the shock strut cylinder (204) and the rebound chamber (270); and
a second percolation seal (252) configured to restrict a second flow of fluid between the shock strut cylinder (204) and the shock strut piston (206).

10. The landing gear system of claim 9, wherein the fluid source is configured to inflate the first percolation seal (250) and the second percolation seal (252), the first percolation seal (250) restricting the first flow of fluid when inflated, and the second percolation seal (252) restricting the second flow of fluid when inflated, and optionally wherein the fluid source is further configured to deflate the first percolation seal (250) and the second percolation seal (252), the first percolation seal (250) permitting the first flow of fluid when deflated, and the second percolation seal (252) permitting the second flow of fluid when deflated.

11. The landing gear system of claim 9 or 10, wherein the shock strut further includes:
an orifice support tube disposed within the shock strut cylinder (204);
a first channel disposed within the orifice support tube, wherein the first percolation seal (250) is disposed within the first channel; and
a second channel disposed within the orifice support tube, wherein the second percolation seal (252) is disposed within the second channel, and optionally wherein the conduit is coupled to the orifice support tube.

12. The landing gear system of any of claims 9 to 11, wherein the shock strut further includes:
a metering pin coupled to the shock strut piston (206), wherein the second percolation seal (252) is configured to engage the metering pin to restrict the second flow of fluid, and/or wherein the first percolation seal (250) is configured to engage a sidewall of the shock strut cylinder (204) to restrict the first flow of fluid.

13. A method of restricting percolation within a landing gear assembly, comprising:
sensing whether the landing gear assembly is being retracted or extended;
inflating a first percolation seal (250) in response to the landing gear assembly being retracted;
inflating a second percolation seal (252) in response to the landing gear assembly being retracted;
deflating the first percolation seal (250) in response to the landing gear assembly being extended; and
deflating the second percolation seal (252) in response to the landing gear assembly being extended.

14. The method of claim 13, further comprising:
sensing whether the first percolation seal (250) is in an inflated state or a deflated state; and
sensing whether the second percolation seal (252) is in an inflated state or a deflated state.

15. The method of claim 13 or 14, wherein the inflating the first percolation seal (250) comprises:
pressurizing a fluid in communication with the first percolation seal (250) and the second percolation seal (252), and optionally wherein the deflating the first percolation seal (250) comprises:
depressurizing the fluid in communication with the first percolation seal (250) and the second percolation seal (252).
